# EUROPÄISCHE PATENTSCHRIFT

(11) **EP 2 351 065 B1**
(45) Veröffentlichungstag und Bekanntmachung des Hinweises auf die Patenterteilung: **05.12.2012**
(21) Anmeldenummer: 09748089.1
(22) Anmeldetag: 29.10.2009
(51) Int. Cl.: H01J 61/44, C09K 11/81, C09K 11/64, C09K 11/78

(54) **NIEDERDRUCKENTLADUNGSLAMPE**
LOW-PRESSURE DISCHARGE LAMP
LAMPE À DÉCHARGE BASSE PRESSION

(30) Priorität: 31.10.2008 DE 102008054175
(43) Veröffentlichungstag der Anmeldung: 03.08.2011
(73) Patentinhaber: OSRAM AG, 81543 München (DE)
(72) Erfinder: HILSCHER, Achim, 86316 Friedberg (DE); KONRAD, Armin, 86845 Großaitingen (DE)
(86) Internationale Anmeldenummer: PCT/EP2009/064253
(87) Internationale Veröffentlichungsnummer: WO 2010/049471

(56) Entgegenhaltungen:
- WO-A1-02/35577
- WO-A1-2008/012266
- US-A1- 2004 061 428

## Beschreibung

### Technisches Gebiet

Die vorliegende Erfindung betrifft eine Niederdruckentladungslampe mit einem Entladungsgefäß, das einen gasdichten Füllraum begrenzt, in dem ein Füllgas aufgenommen ist, wobei das Entladungsgefäß auf seiner dem Füllraum zugewandten Seite zumindest teilweise mit einer Leuchtstoffmischung beschichtet ist, mittels derer elektromagnetische Strahlung aus dem nicht-sichtbaren Bereich in den sichtbaren Bereich transferierbar ist.

### Stand der Technik

Solche Niederdruckentladungslampen sind weit verbreitet und finden vielfältigen Einsatz, beispielsweise als Leuchtstoffröhren oder Kompaktleuchtstofflampen, die häufig auch als Energiesparlampen bezeichnet werden.

Aus dem Dokument US 2004/0061428 A1 ist eine Entladungslampe bekannt, die eine Schicht mit einem lumineszenten Material aufweist.

Aus dem Dokument WO 2008/012266 sind Luminophore und Grundstoffe für die Luminophore beschrieben. Die Luminophore kommen teilweise bei Entladungslampen zum Einsatz.

### Darstellung der Erfindung

Die Aufgabe der vorliegenden Erfindung ist es, eine Niederdruckentladungslampe bereitzustellen, die gleichzeitig energiesparend ist und eine gute Effizienz besitzt.

Diese Aufgabe wird gelöst durch eine Niederdruckentladungslampe mit den Merkmalen des Anspruchs 1.

Vorteilhafte Weiterbildungen der Erfindung finden sich in den abhängigen Ansprüchen.

Eine erfindungsgemäße Niederdruckentladungslampe weist ein Entladungsgefäß auf, welches einen gasdichten Füllraum begrenzt, in dem ein Füllgas aufgenommen ist. Das Entladungsgefäß ist auf seiner dem Füllraum zugewandten Seite zumindest teilweise mit einer Leuchtstoffmischung beschichtet, mittels derer elektromagnetische Strahlung aus dem nicht-sichtbaren Bereich in den sichtbaren Bereich transferierbar ist. Bei der Leuchtstoffmischung kann es sich beispielsweise um eine sogenannte Dreibandenmischung handeln. Die Bezeichnung Dreibandenmischung bedeutet, dass das Emissionsspektrum der verwendeten Leuchtstoffe derart auf die Empfindlichkeit des menschlichen Auges abgestimmt ist, dass ein bestmöglicher Farbreiz erzielt wird. Das Auge hat drei Farbrezeptoren, die im roten, grünen und blauen Spektralbereich relativ schmale Empfindlichkeitsmaxima besitzen, die bestmöglich stimuliert werden müssen. Dies erfolgt bei Dreibandennmischungen dadurch, dass die verwendeten Leuchtstoffe sehr schmale Emissionsbande aufweisen, deren Peakwellenlängen möglichst im Bereich der jeweiligen Empfindlichkeitsmaxima des Auges liegen. Mittels der Dreibandentechnologie werden die drei spektralen Empfindlichkeitsbereiche des Auges deshalb durch schmalbandig emittierende Leuchtstoffe bestmöglich angeregt. Damit ist das Helligkeitsempfinden und somit die Lichtausbeute besonders hoch. Hierbei können je Empfindlichkeitsmaximum des Auges mehrere Emissionsbande vorliegen.

Die Niederdruckentladungslampe kann mindestens einen Sockel mit elektrischen Kontaktelementen aufweisen, wobei das Entladungsgefäß und der Sockel einstückig miteinander verbunden sind.

Generell kann eine erfindungsgemäße Niederdruckentladungslampe einen Sockel mit elektrischen Kontaktelementen und ein zumindest bereichsweise lichtdurchlässiges Abschirmelement aufweisen, welches die Niederdruckentladungslampe in wenigstens eine Raumrichtung begrenzt, wobei das Abschirmelement und der Sockel einstückig miteinander verbunden sind und einen gasdichten Füllraum begrenzen, in dem ein Füllgas aufgenommen ist. Das Abschirmelement kann vorzugsweise in Form eines Entladungsgefäßes ausgebildet sein. Das Abschirmelement ist auf seiner dem Füllraum zugewandten Seite zumindest teilweise mit einer Leuchtstoffmischung beschichtet, mittels derer elektromagnetische Strahlung aus dem nicht-sichtbaren Bereich in den sichtbaren Bereich transferierbar ist.

Erfindungsgemäß ist bei der Niederdruckentladungslampe als Füllgas überwiegend Argon vorgesehen und die Leuchtstoffmischung weist insbesondere eine verstärkte Ausbeute im grünen Spektralbereich auf.

Durch die erfindungsgemäße Ausbildung der Niederdruckentladungslampe kann vorteilhaft sichergestellt werden, dass einerseits die Brennspannung abnimmt, da das Füllgas neben Argon wenig oder kein Neon enthält. Dem Argon kann beispielsweise auch Krypton beigesetzt werden. Hierdurch sinkt der Energieverbrauch der Niederdruckentladungslampe gegenüber herkömmlichen Niederdruckentladungslampen. Dies bewirkt gleichzeitig eine Abnahme der Betriebstemperatur der Niederdruckentladungslampe, wodurch sich die Lichtstrom-Temperaturkurve zu höheren Temperaturen verschiebt. Dies bedeutet, dass die erfindungsgemäße Niederdruckentladungslampe auch bei höheren Umgebungstemperaturen noch vorteilhaft betrieben werden kann und die relative Lichtausbeute sich verbessert.

Durch das gleichzeitige Vorsehen einer Leuchtstoffmischung mit einer verstärkten Ausbeute im grünen Spektralbereich kann die Effizienz der erfindungsgemäßen Niederdruckentladungslampe weiter gesteigert werden, so dass sich mit einer entsprechend ausgestalteten Niederdruckentladungslampe im Vergleich zu einer herkömmlichen im wesentlichen derselbe Lichtstrom realisieren lässt.

Da die Leuchtstoffmischung, die sich aus einzelnen Leuchtstoffen zusammensetzt, erfindungsgemäß relativ grobkörnig mit einer mittleren Korngröße größer oder gleich 5 µm und bevorzugt kleiner 20 µm ist, kann die Effizienz der erfindungsgemäßen Niederdruckentladungslampe weiter gesteigert werden. Die Korngröße kann mittels eines an sich bekannten Messgerätes, beispielsweise von der Firma CILAS, und bevorzugt nach der Methode der Lasergranulometrie bestimmt werden. Durch die Wahl der entsprechenden Korngröße kann die Effizienz der Leuchtstoffmischung weiter gesteigert werden, da dadurch Lichtstreu- und Reflexionsverluste im Entladungsgefäß reduziert werden können.

Gemäß einer bevorzugten Weiterbildung der Erfindung kann die Leuchtstoffmischung mit Cer und Terbium dotiertes, im grünen Spektralbereich emittierendes Lanthanphosphat, La-PO₄:Ce, Tb enthalten. Die Peakwellenlänge liegt hier bei 544 nm. Die Dotierung ist insbesondere derart gewählt, dass der Leuchtstoff durch die chemische Zusammensetzung La_{(1-x-y)}PO₄:Ceₓ, Tb_{y} mit 0.25 <= x <= 0.38 und 0,18 <= y <= 0.25 beschreibbar ist. Die Angaben für die Dotierung beziehen sich dabei auf die Stoffmenge dieses Leuchtstoffs. Bevorzugt ist dabei y größer als 0,2. Durch den Einsatz dieses hochdotierten Leuchtstoffes im grünen Spektralbereich, der bevorzugt der einzige im grünen Spektralbereich emittierende Leuchtstoff der verwendeten Leuchtstoffmischung ist, kann die Lichtstromausbeute der erfindungsgemäßen Niederdruckentladungslampe vorteilhaft beeinflusst werden.

Besonders bevorzugt ist die mittlere Korngröße des mit Cer und Terbium dotierten Lanthanphosphats größer oder gleich 5 µm. Gleichzeitig ist die mittlere Korngröße bevorzugt kleiner 20 µm. Die Korngröße sowie die Verteilungsbreite kann beispielsweise mittels eines an sich bekannten Messgerätes, z. B. von der Firma CILAS, bevorzugt nach der Methode der Lasergranulometrie bestimmt werden. Durch die Wahl der entsprechenden Korngröße kann die Effizienz des Leuchtstoffs weiter gesteigert werden, da sich hierdurch die Lichtstreu- und Reflexionsverluste verringern lassen.

Die Leuchtstoffmischung einer erfindungsgemäßen Niederdruckentladungslampe kann bevorzugt mit Europium dotiertes, im blauen Spektralbereich emittierendes Bariummagnesiumaluminat, BaMgAl₁₀O₁₇:Eu, beinhalten, wobei die Dotierung insbesondere derart gewählt ist, dass die chemische Zusammensetzung durch Ba(₁₋ₓ)MgAl₁₀O₁₇:Euₓ mit 0.10 <= x <= 0.15 gegeben ist. Die Angaben für die Dotierung beziehen sich dabei auf die Stoffmenge dieses Leuchtstoffes. Die Peakwellenlänge dieses Leuchtstoffs liegt bei 448 nm.

Die Leuchtstoffmischung kann auch mit Europium und Mangan dotiertes, im blauen Spektralbereich emittierendes Bariummagnesiumaluminat, BaMgAl₁₀O₁₇:Eu,Mn beinhalten, wobei die Dotierung insbesondere derart gewählt ist, dass die chemische Zusammensetzung durch Ba₍₁₋ₓ)Mg_{(1-y)}Al₁₀O₁₇:Euₓ,Mn_{y} mit 0.10 <= x <= 0.15 und 0.01 <= y <= 0.2 gegeben ist. Hierdurch lässt sich die Farbwiedergabe weiter verbessern, denn durch die Mn-Dotierung wird neben dem Emissionsmaximum bei ca. 451 +/- 3 nm ein zweites Emissionsmaximum im blauen Spektralbereich bei ca. 515 +/- 3 nm erzeugt.

Die Leuchtstoffmischung kann mit Europium dotiertes, im roten Spektralbereich emittierendes Yttriumoxid beinhalten, Y₂O:Eu. Die chemische Zusammensetzung ist dabei insbesondere durch Y₍₂₋ₓ₎O₃:Euₓ mit 0,07 <= x <= 0,15 gegeben. Die Angaben für die Dotierung beziehen sich dabei auf die Stoffmenge dieses Leuchtstoffs. Die Peakwellenlänge dieses Leuchtstoffs liegt bei 611 nm.

Gemäß einer vorteilhaften Weiterbildung der erfindungsgemäßen Niederdruckentladungslampe kann die mittlere Korngröße des mit Europium dotierten Bariummagnesiumaluminats größer oder gleich 6,5 µm sein. Die mittlere Korngröße des mit Europium dotierten Yttriumoxids kann vorteilhafterweise größer oder gleich 5 µm sein. Für beide Leuchtstoffe beträgt die mittlere Korngröße bevorzugt kleiner oder gleich 20 µm. Die Korngröße sowie die Verteilungsbreite können hierbei beispielsweise mittels der Methode der Lasergranulometrie bestimmt werden.

Das Vorsehen solchermaßen hoch dotierter Leuchtstoffe hat sich als besonders vorteilhaft erwiesen, da sich hierdurch die Quanteneffizienz der Leuchtstoffmischung steigern lässt. Die Quanteneffizienz der Leuchtstoffmischung ist die Wahrscheinlichkeit dafür, dass für ein absorbiertes Photon aus dem UV-Bereich ein Photon im sichtbaren Spektralbereich emittiert wird. Diese erhöhte Quanteneffizienz wirkt bei der Erhöhung der Lichtstromausbeute besonders vorteilhaft mit der durch die Wahl der Korngröße erzielten Reduzierung der Lichtstreu- und Reflexionsverluste zusammen.

Bevorzugt können Europium dotiertes Bariummagnesiumaluminat, Europium dotiertes Yttriumoxid und Cer und Terbium dotiertes Lanthanphosphat insbesondere gemeinsam in der Leuchtstoffmischung einer erfindungsgemäßen Niederdruckentladungslampe zum Einsatz kommen. Insbesondere können sie in Form einer sogenannten Dreibandenmischung vorgesehen sein. Beispielhafte Mischungsverhältnisse für solche Dreibandenmischungen sind 77,4 % Y₂O₃:Eu, 22,6 % LaPO₄:Ce, Tb und 0 % BaMgAl₁₀O₁₇:Eu; 69,0 % Y₂O₃:Eu, 29,2 % LaPO₄:Ce, Tb und 1, 8 % BaMgAl₁₀O₁₇:Eu oder 51,5 % Y₂O₃:Eu, 39,2 % La-PO₄ : Ce, Tb und 9,27 % BaMgAl₁₀O₁₇:Eu, wobei der Toleranzbereich der Mischungsverhältnisse 3 % der angegebenen Mengen beträgt und die Mischungsverhältnisse in Gewichtsprozent angegeben sind. Auch bei einer Mischung mit im wesentlichen nur zwei Leuchtstoffen, Y₂O₃:Eu im roten Spektralbereich und LaPO₄:Ce, Tb im grünen Spektralbereich, liegt eine Dreibandenmischung vor. Der blaue Spektralbereich wird hier durch die sichtbare Quecksilberstrahlung bereitgestellt.

Vorteilhafter Weise kann eine erfindungsgemäße Niederdruckentladungslampe derart ausgebildet sein, dass die Leuchtstoffmischung ein Bindemittel umfasst, dessen Korngröße insbesondere im Bereich von 50 - 200 m²/g liegen kann. Der Masseanteil des Bindemittels bezogen auf die Gesamtleuchtstoffmasse kann bevorzugterweise im Bereich von 0,5 bis 5 Gewichts-% liegen und besonders bevorzugt zwischen 0,75 und 1,0 Gewichts-% betragen. Als Bindemittel kann vorteilhafterweise ein Aluminium-Oxid zum Einsatz kommen, beispielsweise Aeroxide AluC von Evonik, früher Degussa, oder ein anderes gamma-Aluminium-Oxid mit einer spezifischen Oberfläche im Bereich von 50 - 200 m²/g.

Gemäß einer bevorzugten Ausführungsform kann die erfindungsgemäße Niederdruckentladungslampe als Füllgas 100 % Argon enthalten. Hierdurch kann sichergestellt werden, dass die Brennspannung insbesondere gegenüber vergleichbaren bestehenden Lampen weiter abnimmt, da das Füllgas kein Neon enthält. Der Energieverbrauch der Niederdruckentladungslampe sinkt um etwa 10 % gegenüber herkömmlichen Niederdruckentladungslampen. Durch die hierdurch hervorgerufene weitere Abnahme der Betriebstemperatur der Niederdruckentladungslampe verschiebt sich die Lichtstrom-Temperaturkurve zu höheren Temperaturen. Dies bedeutet, dass die erfindungsgemäße Niederdruckentladungslampe auch bei höheren Umgebungstemperaturen noch vorteilhaft betrieben werden kann und die relative Lichtstromausbeute sich verbessert. Durch das Vorsehen von Argon als einzigem Füllgas kann ferner das Kaltstartverhalten der erfindungsgemäßen Niederdruckentladungslampe vorteilhaft beeinflusst werden. Dies wirkt sich besonders günstig bei Umgebungstemperaturen der Lampe unterhalb 20°C aus.

Besonders vorteilhafter Weise kann eine erfindungsgemäße Niederdruckentladungslampe derart ausgebildet sein, dass auf der dem Füllraum zugewandten Seite des Entladungsgefäßes eine Schutzschicht, insbesondere aus Aluminiumoxid aufgebracht ist. Diese Schutzschicht wird auf das Entladungsgefäß aufgebracht, bevor es mit der Leuchtstoffmischung beschichtet wird. Durch diese Schutzschicht kann die Diffusion von Quecksilber in das Material des Entladungsgefäßes, im allgemeinen Glas, reduziert werden. Bei dem Entladungsgefäß wird somit die Innenseite des Entladungsgefäßes zuerst mit der Schutzschicht und dann mit der Leuchtstoffmischung beschichtet. Das Aufbringen einer solchen Schutzschicht ist bekannt, die Schichtdicke der aufgebrachten Schutzschicht liegt bevorzugt im Bereich von 50 - 500 nm. Die Schutzschicht umfasst bevorzugt eine Mischung aus Aluminium-Oxid und Seltenerdionen wie Yttrium, Y, Gadolinium, Gd, Lanthan, La, oder Barium, Ba, beispielsweise kann hierfür Aeroxide AluC von Evonik, früher Degussa, zum Einsatz kommen.

Gemäß einer vorteilhaften Weiterbildung der erfindungsgemäßen Niederdruckentladungslampe kann das mittlere Schichtgewicht der Beschichtung des Entladungsgefäßes durch die Leuchtstoffmischung größer oder gleich 4,3 mg/cm² sein. Weiter bevorzugt kann das mittlere Schichtgewicht der Beschichtung des Entladungsgefäßes durch die Leuchtstoffmischung kleiner oder gleich 5,5 mg/cm² sein. Hierdurch kann sichergestellt werden, dass Photonen im UV-Bereich nahezu vollständig in der Leuchtstoffschicht absorbiert werden. Der Anteil der durch die Leuchtstoffschicht transmittierten UV-Photonen, der strahlungslos im Glas absorbiert wird, kann hierdurch verringert werden. Die erfindungsgemäße Niederdruckentladungslampe kann nur einen Sockel aufweisen und insbesondere zur Gruppe der sogenannten Kompaktlampen gehören, bei denen eine mit Leuchtstoff beschichtete und mit Füllgas befüllte, an ihren Enden abgedichtete Röhre das Entladungsgefäß bildet und derart geformt ist, dass ihre beiden Enden an einem einzigen Sockel gehaltert sind. Alternativ lässt sich eine erfindungsgemäße Niederdruckentladungslampe aber auch mit zwei Sockeln, insbesondere auch in Form einer Leuchtstoffröhre versehen. Vorteilhaft bei beiden Ausgestaltungen ist, dass bei der Herstellung einer erfindungsgemäßen Niederdruckentladungslampe lediglich die Art des Füllgases und die Leuchtstoffmischung geändert werden müssen und die Produktionslinie ansonsten unverändert bleiben kann. So ist eine einfache und kostengünstige Herstellung gewährleistbar. Hierdurch ist es ferner möglich, die erfindungsgemäße Niederdruckentladungslampe als sogenanntes Retrofit einzusetzen. Das bedeutet, dass die Niederdruckentladungslampe ohne weitere Anpassungsmaßnahmen in bestehende Fassungen eingesetzt werden kann. Bestehende Leuchteneinrichtungen können somit einfach mit erfindungsgemäßen Niederdruckentladungslampen betrieben werden, wobei sich Leistungseinsparungen bei gleichzeitig im wesentlichen unverändertem Lichtstrom erzielen lassen.

Der Sockel kann vorteilhafterweise als ein bekannter und im wesentlichen standardisierter Sockel ausgeführt sein, wodurch die umfassende Einsatzmöglichkeit der erfindungsgemäßen Niederdruckentladungslampe weiter vereinfacht wird.

Gemäß einer weiteren vorteilhaften Ausgestaltung der Erfindung ist die Niederdruckentladungslampe zum Betreiben mit einem konventionellen Vorschaltgerät ausgebildet. Hierdurch lassen sich im Betrieb die erfindungsgemäßen Vorteile besonders einfach realisieren, da bei konventionellen Vorschaltgeräten keine Regelung des Stroms oder der Spannung dahingehend erfolgt, dass diese konstant gehalten werden. Somit kann der Effekt der Brennspannungserniedrigung durch den Einsatz von im wesentlichen Argon als Füllgas besonders gut genutzt werden, da es zu keiner wesentlichen Veränderung und insbesondere nur zu einer derart geringfügigen Erhöhung des Entladungsstroms kommt, so dass die Leistungsaufnahme der Niederdruckentladungslampe sinkt. Insbesondere kann in diesem Fall der Sockel der erfindungsgemäßen Niederdruckentladungslampe als elektrische Kontaktelemente zwei Kontaktstifte aufweisen zum Betrieb mittels des konventionellen Vorschaltgeräts.

Alternativ kann die erfindungsgemäße Niederdruckentladungslampe auch zum Betreiben mit einem elektronischen Vorschaltgerät ausgebildet sein, wobei dieses bevorzugt den Strom konstant regelt, da sich hierdurch die Leistungseinsparungen ohne gleichzeitige Erhöhung des Entladungsstroms in der Niederdruckentladungslampe besonders einfach realisieren lassen.

### Bevorzugte Ausführung der Erfindung

Im Folgenden soll die Erfindung anhand eines bevorzugten Ausführungsbeispiels näher erläutert werden.

Hierzu wurden an sich bekannte Niederdruckentladungslampen der Form Kompaktleuchtstofflampe, vorliegend des Typs DULUX D 18 W und DULUX D 26 W der Firma OSRAM GmbH versuchsweise bei unveränderter Geometrie und gleichbleibendem Sockel dahingehend verändert, dass als Füllgas 100 % Argon verwendet wurde. Die Leuchtstoffbeschichtung wurde ebenfalls verändert und setzte sich aus einer Leuchtstoffmischung aus folgenden Leuchtstoffen zusammen, La-PO₄:Ce,Tb, Y₂O₃ : Eu und BaMgAl₄O₁₀:Eu, und zwar in folgendem Mischungsverhältnis, 51,5 % Y₂O;:Eu, 39,2 % LaPO₄:Ce, Tb und 9,27 % BaMgAl₁₀O₁₇:Eu, wobei der Toleranzbereich 3 % der angegebenen Mengen beträgt.

Die Leuchtstoffe hatten dabei die chemische Zusammensetzung von Ba_{0.9}MgAl₁0O₁₇.Eu_{0.1}, La_{0.4}PO₄:Ce_{0.4}, Tb_{0.2} und Y_{1.93}O₃: Eu_{0,07}.

Das mittlere Schichtgewicht der Leuchtstoffmischung betrug in etwa 5,1 mg/cm² bezogen auf die beschichtete Fläche. Die erfindungsgemäß veränderten Lampen wurden mit dem zusätzlichen Kürzel ES, Energy Saver, versehen.

Im Betrieb an einem konventionellen Vorschaltgerät konnte nachgewiesen werden, dass die Lampen gegenüber den herkömmlichen DULUX D Lampen eine Leistungseinsparung im Bereich von 10 % erzielen konnten. So konnte die der DULUX D 18 W entsprechende modifizierte Lampe im wesentlichen bei 16 W betrieben werden, die der DULUX D 26 W entsprechende modifizierte Lampe im wesentlichen bei 23 W.

In der folgenden Tabelle 1 sind die Versuchsbedingungen sowie die erzielten Meßergebnisse zusammengefasst.

**Tabelle 1:**

| | | |
|---|---|---|
| | DULUX D 16W ES | DULUX D 23W ES |
| Geometrie wie | DULUX D 18W | DULUX D 26W |
| U_{Lp}[V] | 85 | 90 |
| I_{Lp}[mA] | 235 | 340 |
| P_{Lp}[W] | 16 | 24 |
| Füllgas | 100% Argon | 100% Argon |
| Fülldruck [Pa] | 600 | 600 |
| Grüner Leuchtstoff | LaPO₄ : Ce, Tb | LaPO₄ : Ce, Tb |
| Schichtgewicht [g/Lampe] | 0, 31 | 0,36 |
| Φ (25°C) [1m] | 1120 | 1700 |
| Φ (35°C) [1m] | 1040 | 1570 |

Ferner wurden Messungen an wie beschrieben modifizierten Niederdruckentladungslampen mit dem Zusatz ES und Vergleichslampen DULUX D durchgeführt, bei denen der Lichtstrom in Abhängigkeit von der Umgebungstemperatur der Lampe gemessen wurde. Die Ergebnisse sind in Tabelle 2 zusammengefasst. Es wird deutlich, dass der Lichtstrom sowohl für die Vergleichslampen als auch für die erfindungsgemäßen Niederdruckentladungslampe geringerer Leistungsaufnahme im selben Bereich liegt.

**Tabelle 2:**

| | **Lichtstrom [lm]** | | | |
|---|---|---|---|---|
| [°C] | DULUX D 18W | DULUX D 16W ES | DULUX D 26W | DULUX D 23W ES |
| 25 | 1185 | 1148 | 1808 | 1700 |
| 30 | 1154 | 1107 | 1710 | 1652 |
| 35 | 1081 | 1075 | 1608 | 1570 |
| 50 | 882 | 897 | 1325 | 1331 |

Weitere Messungen wurden in einer typischen Leuchte mit horizontaler Anordnung der Niederdruckentladungslampe bei einer Umgebungstemperatur der Leuchte von 25°C durchgeführt. Tabelle 3 zeigt die entsprechenden Ergebnisse.

**Tabelle 3:**

| | DULUX D 18W | DULUX D 16W ES | DULUX D 26W | DULUX D 23W ES |
|---|---|---|---|---|
| Φ (25°C) [lm] | 1128 | 1082 | 1626 | 1585 |
| P_{Lamp} [W] | 17,3 | 15, 0 | 27,4 | 24,3 |
| η_{Lamp} [lm/W] | 65,2 | 72, 1 | 59,3 | 65,2 |

Bemerkenswert hierbei ist die besonders gute Effizienz η_{Lamp} der erfindungsgemäßen Niederdruckentladungslampen in Relation zu den Vergleichslampen.

Es ist klar ersichtlich, dass mit erfindungsgemäßen Niederdruckentladungslampen eine deutliche Reduzierung der Leistungsaufnahme bei gleichzeitig hoher Ausbeute des Lichtstroms realisierbar ist.

Es ist davon auszugehen, dass sich bei der Überführung in die Serienproduktion noch weitere Verbesserungen erzielen lassen, da sich dann Unregelmäßigkeiten bei der Herstellung, insbesondere beim Beschichtungsprozess im wesentlichen vermeiden lassen.

Es konnte somit gezeigt werden, dass sich mit erfindungsgemäßen Niederdruckentladungslampen, deutliche Leistungseinsparungen bei hohem Lichtstrom erzielen lassen. Dies kann erfindungsgemäß insbesondere durch den Einsatz eines veränderten Füllgases und eines Leuchtstoffes mit hoher Ausbeute im grünen Spektralbereich ermöglicht werden. Bevorzugt können hierbei hoch dotierte grobkörnige Leuchtstoffe zum Einsatz kommen.

## Patentansprüche

1. Niederdruckentladungslampe mit einem Entladungsgefäß, das einen gasdichten Füllraum begrenzt, in dem ein Füllgas aufgenommen ist, wobei das Entladungsgefäß auf seiner dem Füllraum zugewandten Seite zumindest teilweise mit einer Leuchtstoffmischung beschichtet ist, mittels derer elektromagnetische Strahlung im nicht-sichtbaren Bereich in den sichtbaren Bereich transferierbar ist,
**dadurch gekennzeichnet, dass**
als Füllgas überwiegend Argon vorgesehen ist und die mittlere Korngröße der Leuchtstoffmischung größer als 5 µm ist, und dass
das mittlere Schichtgewicht der Beschichtung des Entladungsgefäßes durch die Leuchtstoffmischung größer oder gleich 4,3 mg/cm² ist.

2. Niederdruckentladungslampe nach Anspruch 1,
**dadurch gekennzeichnet, dass**
die Leuchtstoffmischung mit Cer und Terbium dotiertes, im grünen Spektralbereich emittierendes Lanthanphosphat beinhaltet, wobei die Dotierung insbesondere derart gewählt ist, dass die chemische Zusammensetzung durch La_{(1-x-y)}PO₄:Ceₓ, Tb_{y} mit 0.25 <= x <= 0.38 und 0,18 <= y <= 0.25 geben ist.

3. Niederdruckentladungslampe nach Anspruch 2,
**dadurch gekennzeichnet, dass**
die mittlere Korngröße des mit Cer und Terbium dotierten Lanthanphosphats größer als 5 µm ist.

4. Niederdruckentladungslampe nach einem der Ansprüche 1 - 3,
**dadurch gekennzeichnet, dass**
die Leuchtstoffmischung mit Europium dotiertes, im blauen Spektralbereich emittierendes Bariummagnesiumaluminat beinhaltet, wobei die Dotierung insbesondere derart gewählt ist, # dass die chemische Zusammensetzung durch Ba₍₁₋ₓ₎MgAl₁₀O₁₇:Euₓ mit 0.10 <= x <= 0.15 gegeben ist, und/oder mit Europium dotiertes, im roten Spektralbereich emittierendes Yttriumoxid beinhaltet, wobei die Dotierung insbesondere durch Y₍₂₋ₓ)O₃:Euₓ mit 0,07 <= x <= 0,15 gegeben ist.

5. Niederdruckentladungslampe nach einem der Ansprüche 1 - 4,
**dadurch gekennzeichnet, dass**
die Leuchtstoffmischung mit Europium und Mangan dotiertes, im blauen Spektralbereich emittierendes Bariummagnesiumaluminat beinhaltet, wobei die Dotierung insbesondere derart gewählt ist, dass die chemische Zusammensetzung durch Ba₍₁₋ₓ₎Mg(_{1-y)}Al₁₀O₁₇:Euₓ,Mn_{y} mit 0.10 <= x <= 0.15 und 0.01 <= y <= 0.2 gegeben ist.

6. Niederdruckentladungslampe nach Anspruch 4 oder 5,
**dadurch gekennzeichnet, dass**
die mittlere Korngröße des mit Europium dotierten Bariummagnesiumaluminats größer oder gleich 6,5 µm ist und/oder die mittlere Korngröße des mit Europium dotierten Yttriumoxids größer oder gleich 5 µm ist.

7. Niederdruckentladungslampe nach einem der Ansprüche 1 - 6,
**dadurch gekennzeichnet, dass**
die Leuchtstoffmischung ein Bindemittel beinhaltet, dessen Masseanteil an der Gesamtleuchtstoffmasse im Bereich von 0,5 bis 5 Gewichts-% liegt.

8. Niederdruckentladungslampe nach einem der Ansprüche 1 - 7,
**dadurch gekennzeichnet, dass**
als Füllgas 100 % Argon vorgesehen sind.

9. Niederdruckentladungslampe nach einem der Ansprüche 1 - 8,
**dadurch gekennzeichnet, dass**
sie zum Betreiben mit einem konventionellen Vorschaltgerät ausgebildet ist.

10. Niederdruckentladungslampe nach einem der Ansprüche 1 - 8,
**dadurch gekennzeichnet, dass**
sie zum Betreiben mit einem elektronischen Vorschaltgerät ausgebildet ist.

## Claims

1. Low-pressure discharge lamp having a discharge vessel which delimits a gas-tight fill chamber containing a filling gas, wherein the side of the discharge vessel facing the fill chamber is coated at least partially with a luminescent phosphor mixture by means of which electromagnetic radiation in the non-visible range can be transferred into the visible range,
**characterised in that**
argon is primarily provided as the filling gas and the average particle size of the luminescent phosphor mixture is greater than 5 µm and that
the average layer weight of the coating of the discharge vessel as a result of the luminescent phosphor mixture is greater than or equal to 4.3 mg/cm².

2. Low-pressure discharge lamp according to claim 1, **characterised in that**
the luminescent phosphor mixture contains cerium- and terbium-doped lanthanum phosphate emitting in the green spectral region, the doping being chosen in particular such that the chemical composition is given by La_{(1-x-y)}PO₄:Ceₓ, Tb_{y}, where 0.25 <= x <= 0.38 and 0.18 <= y <= 0.25.

3. Low-pressure discharge lamp according to claim 2, **characterised in that**
the average particle size of the cerium- and terbium-doped lanthanum phosphate is greater than 5 µm.

4. Low-pressure discharge lamp according to one of claims 1 - 3,
**characterised in that**
the luminescent phosphor mixture contains europium-doped barium magnesium aluminate emitting in the blue spectral region, the doping being chosen in particular such that the chemical composition is given by Ba₍₁₋ₓ)MgAl₁₀O₁₇:EUₓ, where 0.10 <= x <= 0.15, and/or contains europium-doped yttrium oxide emitting in the red spectral region, the doping being given in particular by Y₍₂₋ₓ)O₃:Euₓ, where 0.07 <= x <= 0.15.

5. Low-pressure discharge lamp according to one of claims 1 - 4,
**characterised in that**
the luminescent phosphor mixture contains europium- and manganese-doped barium magnesium aluminate emitting in the blue spectral region, the doping being chosen in particular such that the chemical composition is given by Ba(₁₋ₓ)Mg_{(1-y)}Al₁₀O₁₇:Euₓ,Mn_{y}, where 0.10 <= x <= 0.15 and 0.01 <= y <= 0.2.

6. Low-pressure discharge lamp according to claim 4 or 5, **characterised in that**
the average particle size of the europium-doped barium magnesium aluminate is greater than or equal to 6.5 µm and/or the average particle size of the europium-doped yttrium oxide is greater than or equal to 5 µm.

7. Low-pressure discharge lamp according to one of claims 1 - 6,
**characterised in that**
the luminescent phosphor mixture includes a binding agent whose mass fraction referred to the total phosphor mass lies in the range from 0.5 to 5 % by weight.

8. Low-pressure discharge lamp according to one of claims 1 - 7,
**characterised in that**
100 % argon is provided as the filling gas.

9. Low-pressure discharge lamp according to one of claims 1 - 8,
**characterised in that**
it is embodied for operation with a conventional ballast.

10. Low-pressure discharge lamp according to one of claims 1 - 8,
**characterised in that**
it is embodied for operation with an electronic ballast.

## Revendications

1. Lampe à décharge basse pression comprenant une enceinte de décharge, laquelle limite un espace de remplissage étanche au gaz qui contient un gaz de remplissage, l'enceinte de décharge étant revêtue sur le côté orienté vers l'espace de remplissage, au moins en partie, d'un mélange de substance luminescente permettant de transférer le rayonnement électromagnétique appartenant au domaine du non-visible dans le domaine visible,
**caractérisée en ce que**
l'argon est principalement prévu comme gaz de remplissage et la granulométrie moyenne du mélange de substance luminescente est supérieure à 5 µm, et **en ce que** le poids moyen de la couche de revêtement de l'enceinte de décharge obtenue par le mélange de substance luminescente est supérieur ou égal à 4,3 mg/cm².

2. Lampe à décharge basse pression selon la revendication 1,
**caractérisée en ce que**
le mélange de substance luminescente contient du phosphate de lanthane dopé au cérium et terbium, qui émet dans le domaine spectral du vert, le dopage étant notamment choisi de manière à ce que la composition chimique soit donnée par La_{(1-x-y})PO₄-Ceₓ,Tb_{y} avec 0,25 <= x <= 0,38 et 0,18 <= y <= 0,25.

3. Lampe à décharge basse pression selon la revendication 2,
**caractérisée en ce que**
la granulométrie moyenne du phosphate de lanthane dopé au cérium et terbium est supérieure à 5 µm.

4. Lampe à décharge basse pression selon l'une des revendications 1 - 3,
**caractérisée en ce que**
le mélange de substance luminescente contient de l'aluminate de magnésium et de baryum dopé à l'europium, qui émet dans le domaine spectral du bleu, le dopage étant notamment choisi de manière à ce que la composition chimique soit donnée par Ba₍₁₋ₓ₎MgAl₁₀O₁₇:Euₓ avec 0,10 <= x <= 0,15, et/ou contient de l'oxyde d'yttrium dopé à l'europium, qui émet dans le domaine spectral du rouge, où le dopage est notamment donné par Y₍₂₋ₓ)O₃:Euₓ avec 0,07 <= x <= 0,15.

5. Lampe à décharge basse pression selon l'une des revendications i - 4,
**caractérisée en ce que**
le mélange de substance luminescente contient de l'aluminate de magnésium et de baryum dopé à l'europium et au manganèse, qui émet dans le domaine spectral du bleu, le dopage étant notamment choisi de manière à ce que la composition chimique soit donnée par Ba₍₁₋ₓ₎Mg_{(1-y})Al₁₀O₁₇:Eu_{X},Mn_{Y} avec 0,10 <= x <= 0,15 et 0,01 <= y <= 0,2.

6. Lampe à décharge basse pression selon la revendication 4 ou 5,
**caractérisée en ce que**
la granulométrie moyenne de l'aluminate de magnésium et de baryum dopé à l'europium est supérieure ou égale à 6,5 µm et/ou la granulométrie moyenne de l'oxyde d'yttrium dopé à l'europium est supérieure ou égale à 5 µm.

7. Lampe à décharge basse pression selon l'une des revendications 1 - 6,
**caractérisée en ce que**
le mélange de substance luminescente contient un liant, dont le pourcentage massique de la masse totale de substance luminescente est compris entre 0,5 et 5 % en poids.

8. Lampe à décharge basse pression selon l'une des revendications 1 - 7,
**caractérisée en ce que**
l'argon 100 % est prévu comme gaz de remplissage.

9. Lampe à décharge basse pression selon l'une des revendications 1 - 8,
**caractérisée en ce que**
elle est conçue pour fonctionner avec un ballast conventionnel.

10. Lampe à décharge basse pression selon l'une des revendications 1 - 8,
**caractérisée en ce que**
elle est conçue pour fonctionner avec un ballast électronique.
